# EUROPÄISCHE PATENTSCHRIFT

(11) **EP 2 207 665 B1**
(45) Veröffentlichungstag und Bekanntmachung des Hinweises auf die Patenterteilung: **20.07.2011**
(21) Anmeldenummer: 07819453.7
(22) Anmeldetag: 24.10.2007
(51) Int. Cl.: B29C 63/36, F16L 55/165, E03F 3/06, B29C 35/08

(54) **VERFAHREN ZUM AUSKLEIDEN EINER ROHRLEITUNG ODER EINES KANALS**
PROCESS FOR LINING A PIPELINE OR A DUCT
PROCÉDÉ D'HABILLAGE D'UN CONDUIT TUBULAIRE OU D'UN CANAL

(43) Veröffentlichungstag der Anmeldung: 21.07.2010
(73) Patentinhaber: Schwert, Siegfried, 14195 Berlin (DE)
(72) Erfinder: Schwert, Siegfried, 14195 Berlin (DE)
(74) Vertreter: Pfenning, Meinig & Partner GbR
(86) Internationale Anmeldenummer: PCT/EP2007/009414
(87) Internationale Veröffentlichungsnummer: WO 2009/052850

(56) Entgegenhaltungen:
- WO-A-2004/104469
- DE-A1- 19 817 413
- FR-A- 2 724 004

## Beschreibung

Die vorliegende Erfindung bezieht sich auf ein Verfahren zum Auskleiden einer Rohrleitung oder eines Kanals durch eine dichtende Innenauskleidung mit einem Schlauch.

Der nächstkommente Stand der Technik ergibt sich aus WO 2004/104469. In der US-A-4368 091 wird ein Verfahren zum Auskleiden der Innenfläche einer Rohrleitung mit einem flexiblen schlauchförmigen Auskleidungsmaterial unter Verwendung eines als Klebstoff dienenden flüssigen Harzes offenbart. Dieses Verfahren weist die folgenden Schritte auf:
a) Einfüllen einer dosierten Menge des Harzes in das schlauchförmige Auskleidungsmaterial in gleichmäßiger Verteilung über dessen Länge,
b) ringförmiges Befestigen des einen Endes des in seinem Inneren das flüssige Harz enthaltenden Auskleidungsmaterials an dem einen Ende der Rohrleitung,
c) Ausüben eines Drucks mit Hilfe eines Druckmediums auf das Auskleidungsmaterial derart, dass dieses an einem Wendepunkt, der hinter der Befestigungsstelle ausgebildet ist, von innen nach außen gewendet wird, so dass sich das Auskleidungsmaterial in die Rohrleitung hinein bewegt und der Wendepunkt innerhalb der Rohrleitung in Bewegungsrichtung fortschreitet, wobei das gewendete Auskleidungsmaterial mit seiner mit Harz beschichteten Fläche an die Innenfläche der Rohrleitung angedrückt wird, und
d) Aufrechterhalten des Druckes durch das Medium, bis das Harz ausgehärtet ist.

Das Bestreben geht bei diesem bekannten Verfahren dahin, möglichst lange Schläuche als Auskleidungsmaterialien zu verwenden, damit möglichst wenig Zugangsmöglichkeiten zum Inneren der Rohrleitung bzw. des Kanals geschaffen werden müssen. So ist es bereits möglich, Schläuche von mehr als 500 m Länge in die Rohrleitungen bzw. Kanäle einzubringen. Dies ist jedoch ein mehrstündiger Vorgang, wobei allein das Einfüllen und Verteilen des Klebstoffs (etwa 1000 kg bei einem Nenndurchmesser von DN 300 und einer Sanierungslänge von 600 m) über eine Stunde erfordern und die mittlere Vorschubgeschwindigkeit des Schlauches etwa sechs Meter pro Minute beträgt. Der verwendete Klebstoff muss bis zum Abschluss des Auskleidungsvorganges verarbeitbar sein, d.h. eine Topfzeit (Dauer der Verarbeitbarkeit) von mehreren Stunden besitzen. Die Aushärtezeit beträgt bei Kaltaushärtung üblicherweise mindestens das Fünffache der Topfzeit, so dass das Druckmedium länger als einen vollen Tag im Schlauch verbleiben muss, bis der Klebstoff ausreichend ausgehärtet ist. Da bei einer auf diese Weise erfolgenden Sanierung einer Rohrleitung oder eines Kanals der normale Betrieb während dieser Dauer unterbrochen werden muss, kann dies mit erheblichen Betriebseinschränkungen verbunden sein. Eine Verkürzung der Aushärtezeit durch Erwärmung des Druckmediums ist aufwendig und zumindest bei der Sanierung von Rohrleitungen aus Stahl auch insoweit problematisch, als die Rohrleitung nicht auf Temperaturen über 30 °C erwärmt werden sollte, da sonst durch die Wärmespannungen Schweißnahtbrüche auftreten können und äußere bituminöse Korrosionsumhüllungen beschädigt werden können. Bei Rohrleitungen mit großen Längen und großen Durchmessern treten nahezu unüberwindbare technische Schwierigkeiten auf.

Grundsätzlich jedoch sollten durch Verkürzung der Aushärtezeit Rohrleitungen an einem Tag außer Betrieb genommen, gereinigt, mit dem Schlauch ausgekleidet und wieder in Betrieb genommen werden. Aufwendige und teure Notleitungen zur Aufrechterhaltung der Versorgung können damit entfallen.

Aus der US 2006/0254711 A1 ist daher ein Verfahren bekannt, bei dem der eingefüllte Klebstoff zunächst eine lange Aushärtezeit hat, nach dem Einbringen des Schlauchs in die Rohrleitung jedoch einer Bestrahlung mit UV-Strahlen, IR-Strahlen, Mikrowellen und/oder Ultraschall ausgesetzt wird, durch die er in kurzer Zeit aushärtet. Hierzu wird mindestens eine Strahlungseinheit im aktivierten Zustand durch den eingebrachten und durch einen ausreichenden Innendruck an die Innenwand der Rohrleitung angedrückten Schlauch gezogen. Dies kann in der Weise erfolgen, dass zunächst der Schlauch mit einer durch ein durch das Innere des Schlauchs geführtes Rückhalteband kontrollierten Geschwindigkeit in das Rohr eingebracht wird, nach dem Einbringen die Verbindung des Schlauchs mit dem Rückhalteband am in Bewegungsrichtung des Schlauchs vorderen Ende getrennt wird, die Strahlungseinheit mit dem abgetrennten Ende des Rückhaltebands gekoppelt und mittels des Rückhaltebandes im aktivierten Zustand durch den Schlauch zu dessen in seiner Bewegungsrichtung hinteren Ende gezogen wird. Dabei wird das Rückhalteband von der für den Schlauch vor dessen Einbringung in die Rohrleitung vorgesehenen Drehtrommel gezogen und auf dieser aufgewickelt.

Dieses Verfahren hat jedoch den Nachteil, dass die Drehtrommel üblicherweise keine steuerbare Aufwickelgeschwindigkeit hat. Diese ist jedoch unerlässlich, um in Abhängigkeit von der Bestrahlungsdauer den gewünschten Grad der Aushärtung des Klebstoffs zu erzielen. Eine nachträgliche Umrüstung der Drehtrommel für eine steuerbare Aufwickelgeschwindigkeit andererseits ist äußerst aufwändig, da die Drehtrommel erhebliche Abmessungen aufweist und stabil gebaut sein muss. Dies ergibt sich aus dem Umstand, dass sie einen Schlauch mit eingefülltem Klebstoff mit einer Länge von mehreren hundert Metern aufnehmen und abwickeln muss. Zudem verändert sich bei konstanter Aufwickeldrehgeschwindigkeit die Ziehgeschwindigkeit während eines Aufwickelvorgangs aufgrund der Änderung des Wickeldurchmessers.

Weiterhin kann die Gefahr bestehen, dass infolge einer unvorhergesehenen Verengung des freien Rohrquerschnitts die Strahlungseinheit im Rohr stecken bleibt und nicht weitergezogen werden kann. Es muss dann die verengte Stelle ausfindig gemacht werden, es muss ein äußerer Eingang zum Rohr hergestellt werden und das Rohr muss von außen geöffnet werden, um die Strahlungseinheit zu bergen, und anschließend repariert werden. Dies ist ein außerordentlich mühsamer und kostenaufwändiger Vorgang.

Es ist daher die Aufgabe der vorliegenden Erfindung, das bekannte Verfahren so zu verbessern, dass eine übliche Drehtrommel, deren Aufwickelgeschwindigkeit nicht steuerbar ist, verwendet werden kann, und dass im Falle eines Steckenbleibens der Strahlungseinheit diese mühelos geborgen werden kann.

Diese Aufgabe wird erfindungsgemäß gelöst durch ein Verfahren mit den Merkmalen des Anspruchs 1. Vorteilhafte Weiterbildungen dieses Verfahrens ergeben sich aus den Unteransprüchen.

Dadurch, dass nach dem Einbringen des Schlauchs die Verbindung zwischen dem Schlauch und einem durch den gesamten Schlauch in dessen Längsrichtung verlaufenden Rückhalteband am in Bewegungsrichtung des Schlauchs vorderen Ende getrennt wird, das abgetrennte Ende des Rückhaltebands außerhalb der Rohrleitung mit der mindestens einen Strahlungseinheit gekoppelt wird, die mindestens eine Strahlungseinheit im nicht aktivierten Zustand mittels des Rückhaltebands durch den Schlauch bis zu dessen in seiner Bewegungsrichtung hinteren Ende gezogen wird, wobei das Versorgungskabel für die mindestens eine Strahlungseinheit hinter dieser über die gesamte Länge des Schlauchs in diesen eingezogen wird, und danach die mindestens eine Strahlungseinheit im aktivierten Zustand mittels des Versorgungskabels durch den Schlauch über dessen genannte Länge gezogen wird, zieht die Drehtrommel die Strahlungseinheit in deren nicht aktiviertem Zustand durch den Schlauch, so dass die Geschwindigkeit der Strahlungseinheit unerheblich ist. Wenn die Strahlungseinheit aktiviert ist, wird sie demgegenüber mittels des Versorgungskabels von dessen Kabeltrommel gezogen, deren Aufwickelgeschwindigkeit üblicherweise steuerbar ist und die auch wesentlich kleiner als die Drehtrommel für den Schlauch ist. Wenn die Strahlungseinheit mittels des Rückhaltebands durch den Schlauch gezogen wird, ist sie auch mit ihrem Versorgungskabel verbunden. Wenn sie im Schlauch stecken bleibt und durch das Rückhalteband nicht weitergezogen werden kann, kann sie durch das Versorgungskabel in entgegengesetzter Richtung aus dem Schlauch herausgezogen werden.

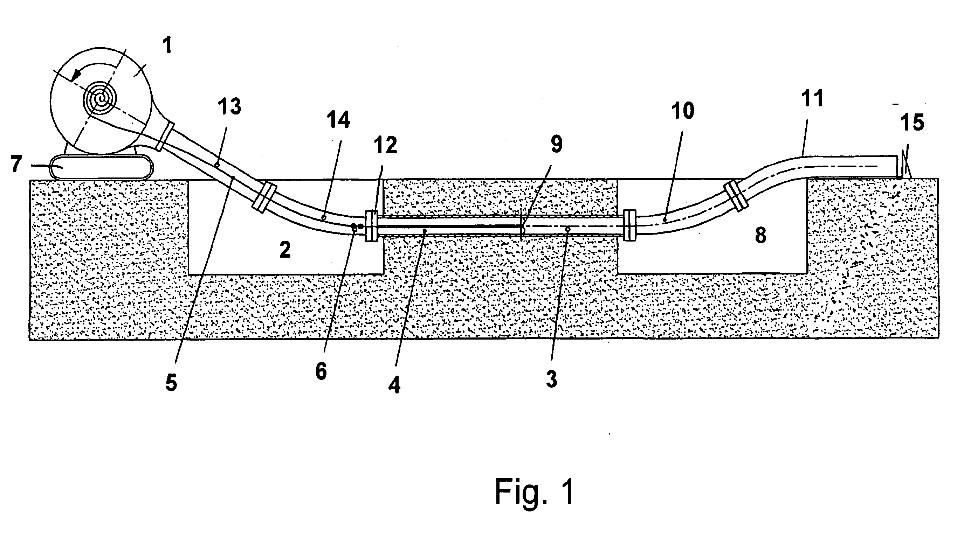

Die Erfindung wird im Folgenden anhand eines in den Figuren 1 bis 5 dargestellten Ausführungsbeispiels näher erläutert. Diese zeigen den Ablauf des Verfahrens in fünf aufeinander folgenden Schritten.

Wie aus Fig. 1 ersichtlich ist, befindet sich eine mobile Drehtrommel 1 in unmittelbarer Nähe einer Einbaugrube 2 für eine zu sanierende Rohrleitung 3. In der Drehtrommel 1 befindet sich zu Beginn des Sanierungsvorganges in aufgewickeltem Zustand ein Gewebeschlauch 4 mit einer Länge von bis zu über 500 m, der in seinem Inneren eine dosierte Menge Klebstoffs enthält, der entweder langsam aushärtend ist oder sich in einem Zustand befindet, in dem keine Aushärtung stattfindet. Weiterhin schließt sich an den Gewebeschlauch 4 ein ebenfalls aufgewickeltes Rückhalteband 5 von etwa gleicher Länge an, welche über ein Verbindungsstück 6 miteinander gekoppelt sind. Ein Luftkompressor 7 ist mit der Drehtrommel 1 verbunden und erzeugt in dieser einen gegenüber der Atmosphäre erhöhten Druck.

Die aus Metall, vorzugsweise Stahl, Grauguss oder duktilem Grauguss, Kunststoff, vorzugsweise PVC oder GFK (glasfaserverstärkter Kunststoff), oder mineralischem Material, vorzugsweise Asbestzement, Steinzeug, Faserzement, Beton, Stahlbeton oder Mauerwerk, bestehende Rohrleitung 3 mündet am der Einbaugrube 2 entgegen gesetzten Ende in eine Zielbaugrube 8.

Am in die Einbaugrube 2 ragenden Ende der Rohrleitung 3 ist ein Umkehrkopf 12 angebracht. Zwischen der Drehtrommel 1 und dem Umkehrkopf 12 befinden sich aufeinander folgend ein Transportschlauch 13, durch den der Gewebeschlauch 4 und anschließend das Rückhalteband 5 beim Einbringen des Gewebeschlauches 4 in die Rohrleitung 3 geführt werden, sowie ein Zwischenschlauch 14.

Es ist auch möglich, den Gewebeschlauch 4 direkt aus der Drehtrommel 1 heraus umzustülpen. Der Umkehrkopf 12 befindet sich dann unmittelbar an der Drehtrommel 1 und der Transportschlauch 13 und der Zwischenschlauch 14 entfallen.

Zu Beginn des Sanierungsvorgangs wird das freie Ende des aufgewickelten Gewebeschlauches 4 durch den Transportschlauch 13 und den Zwischenschlauch 14, bis zum Umkehrkopf 12 gezogen und an diesem befestigt. Dann wird mittels des Luftkompressors 7 der Druck in der Drehtrommel, dem Transportschlauch 13 und dem Zwischenschlauch 14 erhöht, sodass der Gewebeschlauch 4 im gebremsten Freilauf von der Drehtrommel 1 abgewickelt und unter Umstülpen in die Rohrleitung 3 gedrückt wird. Der im Schlauchinneren befindliche Klebstoff gelangt dabei auf die Außenseite des Gewebeschlauches 4, die an der Innenfläche der Rohrleitung 3 anliegt.

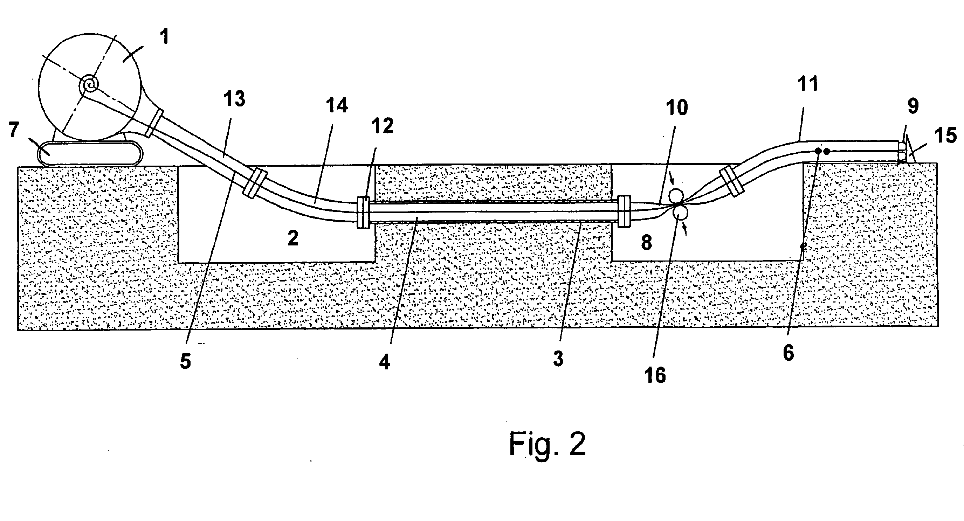

Das in Bewegungsrichtung vordere Ende 9 (wandernder Wendepunkt) des Gewebeschlauches 4 bewegt sich durch die Rohrleitung 3, wie in Fig. 1 gezeigt ist, und gelangt zum in die Zielbaugrube 8 ragenden Ende der Rohrleitung 3, so dass diese über ihre gesamte Länge mit dem Gewebeschlauch 4 ausgekleidet ist. Der Gewebeschlauch 4 wird jedoch noch weiter in einem die Rohrleitung 3 angeschlossenen Klemmschlauch 10 sowie anschließend in einen mit dem Klemmschlauch 10 gekoppelten Schutzschlauch 11 umgestülpt, bis die Verbindungsstelle 6 zwischen Gewebeschlauch 4 und Rückhalteband 5 in den zugänglichen Bereich des Schutzschlauchs 11 gelangt und gegebenenfalls sein vorderes Ende 9 in einem als Gegenlager dienenden Fangkorb 15 aufgenommen wird (Fig. 2).

Der Klemmschlauch 10 ist mit einer Abklemmvorrichtung 16 versehen, die, nachdem das Schlauchende 9 gegebenenfalls den Fangkorb erreicht hat, geschlossen wird (Fig. 2), so dass anschließend das Schlauchende 9 geöffnet werden kann, ohne dass trotz des durch den Gewebeschlauch 4 hindurchgeführten Rückhaltebands 5 der Druck im in der Rohrleitung 3 befindlichen Teil des Gewebeschlauchs 4 abfällt.

Der Schutzschlauch 11 kann nun vom Klemmschlauch 10 abgekoppelt werden. Zudem wird das Verbindungsstück 6 geöffnet bzw. entfernt, so dass die Kopplung zwischen Gewebeschlauch 4 und Rückhalteband 5 aufgehoben wird.

Das aus dem Klemmschlauch 10 herausragende Ende des abgeschnittenen Gewebeschlauchs 4 wird mittels eines Klemmstücks druckdicht mit dem freien Flanschende des Klemmschlauchs 10 verbunden.

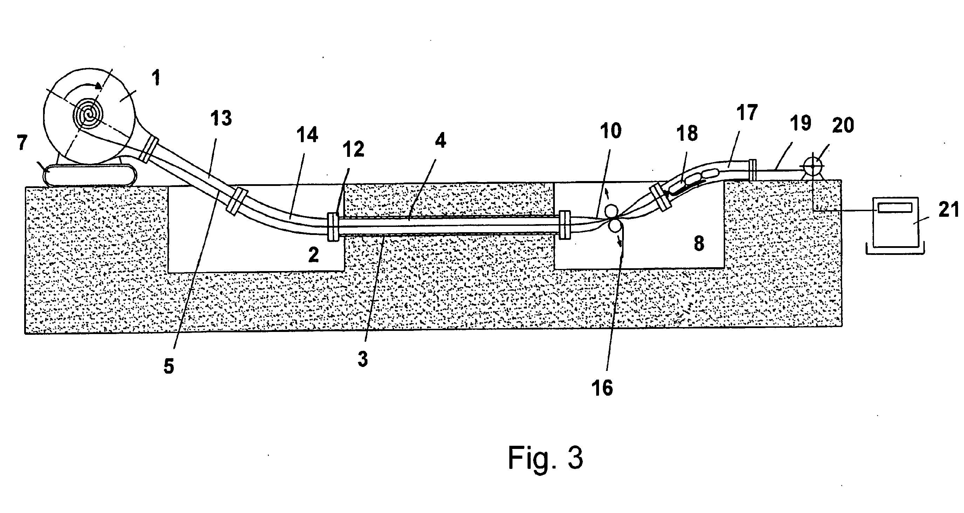

An den Klemmschlauch 10 wird nun ein Schleusenschlauch 17 angekoppelt, in dem sich eine Strahlungseinheit 18 befindet (Fig. 3). Diese ist beispielsweise dreiteilig ausgebildet und besteht aus einer Fernsehkamera, einem UV-Strahler und einem IR-Strahler. Die Strahlungseinheit 18 wird an das freie Ende des Rückhaltebands 5 angekoppelt und dann wird der Schleusenschlauch 17 geschlossen, wobei das Versorgungskabel 19 für die Strahlungseinheit 18 luftdicht aus dem Schleusenschlauch 17 heraus und zu einer Kabelwinde 20 geführt ist. Die Kabelwinde 20 ist mit einer Steuereinheit 21 verbunden und kann so gesteuert werden, dass das Versorgungskabel 19 entweder im Freilauf abgewickelt oder mit einer einstellbaren Geschwindigkeit aufgewickelt werden kann.

Die Abklemmvorrichtung 16 wird anschließend geöffnet, wobei der Innendruck im Gewebeschlauch 4 infolge des Luftdichten Abschlusses durch den Schleusenschlauch 17 aufrechterhalten wird. Die Drehtrommel 1 kann nun den Rückhaltegurt 5 mit durch den antrieb vorgegebener konstanter Drehgeschwindigkeit aufwickeln, wobei die Strahlungseinheit 18 und das angeschlossene Versorgungskabel 19 mitgezogen werden. Der UV-Strahler und der IR-Strahler der Strahlungseinheit 18 sind ausgeschaltet, so dass die Aufwickelgeschwindigkeit der Drehtrommel 1 beliebig sein kann. Die mit der Strahlungseinheit 18 mitgeführte Fernsehkamera kann jedoch eingeschaltet sein.

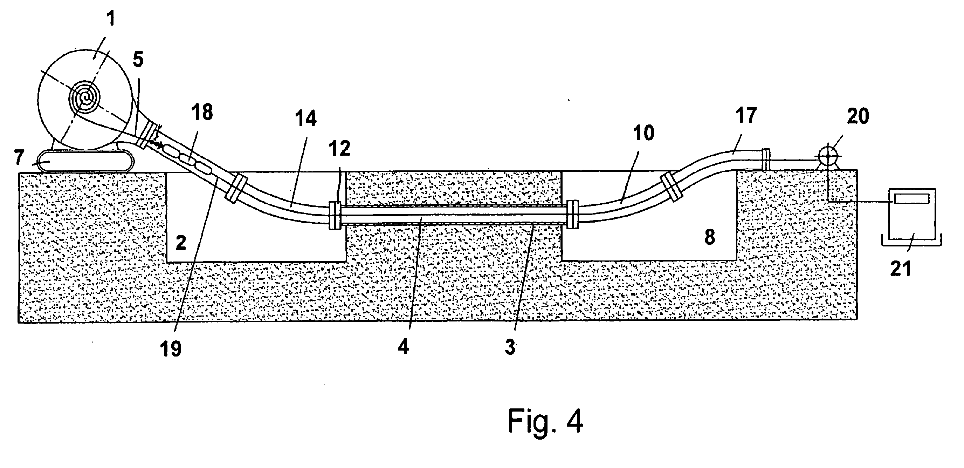

Wenn die Strahlungseinheit 18 im Transportschlauch 13 angekommen ist (Fig. 4), wird der Aufwickelantrieb der Drehtrommel 1 abgeschaltet. Die Kopplung zwischen dem Rückhalteband 5 und der Strahlungseinheit 18 kann aufgehoben werden. dies kann jedoch nur unter Aufrechterhaltung des Drucks im Gewebeschlauch 4 erfolgen. Diese Entkopplung kann stattfinden, da ein Steckenbleiben der Strahlungseinheit 18 nicht mehr zu befürchten ist.

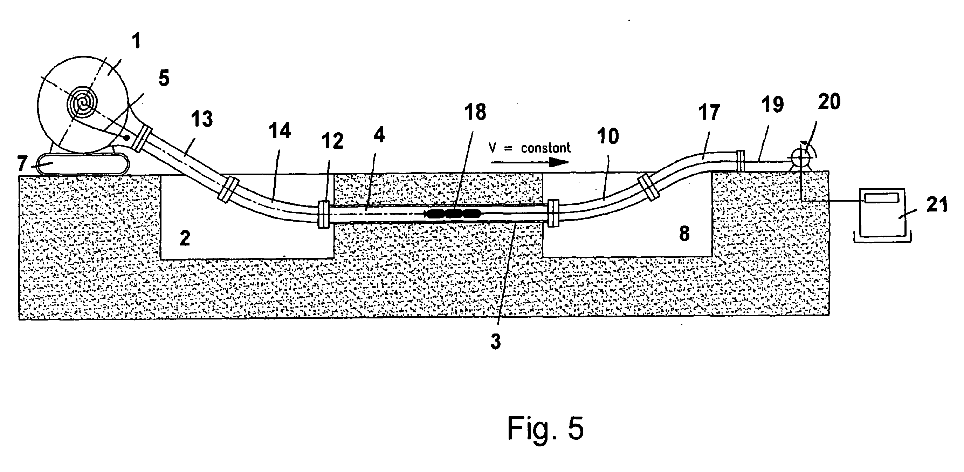

Die Strahlungseinheit 18 wird, wie Fig. 5 zeigt, abschließend bei eingeschaltetem UV-Strahler und IR-Strahler von der Kabelwinde 20 über das Versorgungskabel 19 zur Zielbaugrube 8 zurückgezogen. Die Aufwickelgeschwindigkeit der Kabelwinde 20 wird durch die Steuereinheit 21 so gesteuert, dass der gewünschte Grad der Aushärtung des Klebstoffs zwischen der Außenseite des Gewebeschlauchs 4 und der Innenseite der Rohrleitung 3 erhalten wird. Der Innendruck im Gewebeschlauch 4 wird solange aufrechterhalten, bis die Strahlungseinheit 18 in die Zielbaugrube 8 gelangt ist. Der Klebstoff ist dann über die gesamte Länge der Rohrleitung 3 zumindest soweit ausgehärtet, dass er den Gewebeschlauch 4 fest an der Rohrwand hält. Der Innendruck im Gewebeschlauch 4 ist nicht mehr erforderlich, so dass die Vorrichtung abgebaut werden kann.

## Patentansprüche

1. Verfahren zum Auskleiden einer Rohrleitung (3) oder eines Kanals durch eine dichtende Innenauskleidung mit einem mittels Klebstoff an der Innenwand der Rohrleitung (3) oder des Kanals haftenden, aus einem beschichteten Gewebe, Gewirke, Geflecht, Filz, Gestrick oder Vlies bestehenden Schlauch (4), welches die Schritte aufweist:
Einfüllen einer dosierten Menge eines Klebstoffs unter Bedingungen, bei denen eine Aushärtung des Klebstoffs nicht oder mit langer Aushärtezeit stattfindet, in den Schlauch (4) in gleichmäßiger Verteilung über die Schlauchlänge,
Einbringen des Schlauchs (4) in die Rohrleitung (3) oder den Kanal, wobei das eine Ende des Schlauchs (4) am in Bewegungsrichtung des Schlauchs (4) hinteren Ende der Rohrleitung (3) oder des Kanals festgehalten und der Schlauch (4) mittels Druckbeaufschlagung unter Umstülpen in die Rohrleitung (3) oder den Kanal eingebracht wird,
Schaffen der Bedingungen für den auf der Außenseite des Schlauches (4) befindlichen Klebstoff, um in kurzer Zeit auszuhärten, durch Bestrahlen mittels energiehaltiger Wellen, wobei mindestens eine Strahlungseinheit (18) in axialer Richtung durch den eingebrachten Schlauch (4) gezogen wird, und
Aufrechterhalten des Innendrucks im eingebrachten Schlauch (4), um diesen an die Innenwand der Rohrleitung (3) oder des Kanals anzudrücken, bis der Klebstoff zwischen dem Schlauch (4) und der Innenwand der Rohrleitung (3) oder des Kanals ausgehärtet ist,
**dadurch gekennzeichnet, dass** nach dem Einbringen des Schlauchs (4) die Verbindung zwischen dem Schlauch (4) und einem durch den gesamten Schlauch (4) in dessen Längsrichtung verlaufenden Rückhalteband (5) am in Bewegungsrichtung des Schlauchs (4) vorderen Ende (9) getrennt wird, das abgetrennte Ende des Rückhaltebands (5) außerhalb der Rohrleitung (3) mit der mindestens einen Strahlungseinheit (18) gekoppelt wird, die mindestens eine Strahlungseinheit (18) im nicht aktivierten Zustand mittels des Rückhaltebands (5) durch den Schlauch (4) bis zu dessen in seiner Bewegungsrichtung hinterem Ende gezogen wird, wobei das Versorgungskabel (19) für die mindestens eine Strahlungseinheit (18) hinter dieser über die gesamte Länge des Schlauchs (4) in diesen eingezogen wird, und danach die mindestens eine Strahlungseinheit (18) im aktivierten Zustand mittels des Versorgungskabels (19) durch den Schlauch (4) über dessen gesamte Länge gezogen wird.

2. Verfahren nach Anspruch 1, **dadurch gekennzeichnet, dass** für das Ziehen der mindestens einen Strahlungseinheit (18) im nicht aktivierten Zustand durch den Schlauch (4) eine für das Aufwickeln des Schlauchs (4) vorgesehen Drehtrommel (1) mit fester Aufwickeldrehgeschwindigkeit und gebremstem Freilauf beim Abwickeln verwendet wird.

3. Verfahren nach Anspruch 1 oder 2, **dadurch gekennzeichnet, dass** für das Ziehen der mindestens einen Strahlungseinheit (18) im aktivierten Zustand durch den Schlauch (4) eine für das Aufwickeln des Versorgungskabels (19) vorgesehen Kabelwinde (20) mit steuer- und/oder regelbarer Aufwickelgeschwindigkeit und Freilauf beim Abwickeln verwendet wird.

4. Verfahren nach einem der Ansprüche 1 bis 3, **dadurch gekennzeichnet, dass** zum Koppeln der mindestens einen Strahlungseinheit (18) an das Rückhalteband (5) der in der Rohrleitung (3) befindliche Teil des Schlauches (4) luftdicht gegenüber der Koppelstelle abgeklemmt wird.

5. Verfahren nach Anspruch 4, **dadurch gekennzeichnet, dass** nach dem Koppeln der mindestens einen Strahlungseinheit (18) an das Rückhalteband (5) das in Bewegungsrichtung vordere Ende (9) des Schlauchs (4) unter Einschluss der mindestens einen Strahlungseinheit (18) wieder luftdicht verschlossen und die Abklemmung des in der Rohrleitung (3) befindlichen Teils des Schlauchs (4) aufgehoben wird.

6. Verfahren nach einem der Ansprüche 1 bis 5, **dadurch gekennzeichnet, dass** nach dem Durchziehen der mindestens einen Strahlungseinheit (18) im nicht aktivierten Zustand durch den Schlauch (3) mittels des Rückhaltebands (5) die Strahlungseinheit (18) von diesem abgekoppelt wird.

## Claims

1. A method for lining a pipe conduit (3) or a duct by way of a sealing inner lining with a flexible tubing (4) which consists of a coated fabric, knitted fabric, braiding, felt, non-woven or fleece, and which sticks to the inner wall of the pipe conduit (3) or duct by way of adhesive, which comprises the steps:
filling a metered quantity of an adhesive under conditions, with which a curing of the adhesive does not take place or with a long curing time, into the flexible tubing (4) with a uniform distribution over the flexible tubing length,
introducing the flexible tubing (4) into the pipe conduit (3) or the duct, wherein the one end of the flexible tubing (4) is firmly held at the end of the pipe conduit (3) or the duct, which is at the rear in the movement direction of the flexible tubing (4), and
the flexible tubing (4) is introduced into the pipe conduit (3) or into the duct by way of pressure impingement whilst inverting,
creation of the conditions for the adhesive located on the outer side of the flexible tubing (4), in order to cure in a short time, by way of irradiating by way of energy-containing waves, wherein at least one radiation unit (18) is pulled through the introduced flexible tubing (4) in the axial direction, and
maintaining the inner pressure in the introduced flexible tubing (4), in order to press this onto the inner wall of the pipe conduit (3) or the channel, until the adhesive between the flexible tubing (4) and the inner wall of the pipe conduit (3) or of the duct is cured,
**characterised in that** after introducing the flexible tubing (4), the connection between the flexible tubing (4) and a retaining strap (5) running through the whole flexible tubing (4) in its longitudinal direction, is separated at the end (9) which is at the front in the movement direction of the flexible tubing (4), the separated-away end of the retaining strap (5) is coupled outside the pipe conduit (3) to the at least one radiation unit (18), the at least one radiation unit (18) in the non-activated condition is pulled by way of the retaining strap (5) through the flexible tubing (4) up to its end which is at the rear in the movement direction, wherein the supply cable (19) for the at least one radiation unit (18) is pulled behind this over the complete length of the flexible tubing (4) into this, and thereafter, the at least one radiation unit in the activated condition is pulled by way of the supply cable (19) through the flexible tubing (4) over its complete length.

2. A method according to claim 1, **characterised in that** a rotation drum (1) which is envisaged for the winding up the flexible tubing (4) and with a fixed winding-up rotation speed and braked free-wheel when winding-off, is used for the pulling of the at least one radiation unit (18) in the non-activated condition through the flexible tubing (4).

3. A method according to claim 1 or 2, **characterised in that** for pulling the at least one radiation unit (18) in the activated condition through the flexible tubing (4), one uses a cable winch (20) which is envisaged for the winding-up of the supply cable (19), with a winding-up speed, which may be controlled and/or regulated and with a free-wheel on winding off.

4. A method according to one of the claims 1 to 3, **characterised in that** the part of the flexible tube (4) which is located in the pipe conduit (3) is clamped off in a air-tight manner with respect to the coupling location, for coupling the at least one radiation unit (18) onto the retaining strap (5).

5. A method according to claim 4, **characterised in that** after the coupling of the at least one radiation unit (18) to the retaining strap (5), the end (9) of the flexible tubing (4) which is at the front in the movement direction, is closed again in an airtight manner amid the inclusion of the at least one radiation unit (18), and the clamping-off of the part of the flexible tubing (4) which is located in the pipe conduit (3), is lifted.

6. A method according to one of the claims 1 to 5, **characterised in that** after pulling the at least one radiation unit (18) in the non-activated condition through the flexible tubing (3) by way of the retaining strap (5), the radiation unit (18) is decoupled from this.

## Revendications

1. Procédé d'habillage d'une conduite de tuyau (3) ou d'un canal par un habillage interne étanche avec un tuyau flexible (4) constitué d'un tissu revêtu, d'un maillage, d'un tressage, d'un feutre, d'un tricot ou d'un tissu de toison adhérant à la paroi interne de la conduite de tuyau (3) ou du canal moyennant une colle, qui présente les étapes suivantes:
versement dans le tuyau flexible (4) d'une quantité dosée d'une colle dans des conditions, dans lesquelles aucun durcissement de la colle ne se produira ou uniquement avec un temps de durcissement long, en observant une répartition régulière sur la longueur du tuyau,
insertion du tuyau flexible (4) dans la conduite de tuyau (3) ou le canal, pendant laquelle la une extrémité du tuyau flexible (4) est fixée, dans le sens du déploiement du tuyau flexible (4), à l'extrémité arrière de la conduite de tuyau (3) ou du canal et le tuyau flexible (4) est inséré par application de pression, en le retournant à l'envers, dans la conduite de tuyau (3) ou le canal,
création de conditions pour que la colle se trouvant sur la face externe du tuyau flexible (4) durcisse en peu de temps, moyennant un traitement par ondes énergétiques, pendant lequel on fait passer, à travers le tuyau flexible (4) inséré, au moins une unité de rayonnement(18) dans le sens axial, et
maintien de la pression interne dans le tuyau flexible (4) inséré pour appuyer celui-ci contre la paroi interne de la conduite de tuyau (3) ou du canal jusqu'à durcissement de la colle se trouvant entre le tuyau flexible (4) et la paroi interne de la conduite de tuyau (3) ou du canal,
**caractérisé en ce qu'**après insertion du tuyau flexible (4), la jonction entre le tuyau flexible (4) et une sangle de retenue (5) traversant l'ensemble du tuyau flexible (4) dans son sens longitudinal est coupée, dans le sens du déploiement du tuyau flexible (4), à l'extrémité avant (9), **en ce que** l'extrémité séparée de la sangle de retenue (5) est couplée, à l'extérieur de la conduite de tuyau (3), à la au moins une unité de rayonnement (18), **en ce qu'**au moyen de la sangle de retenue (5), la au moins une unité de rayonnement (18), à l'état non activé, est tirée à travers le tuyau flexible (4), dans le sens du déploiement de celui-ci, jusqu'à son extrémité arrière, pendant que le câble d'alimentation (19) pour la au moins une unité de rayonnement (18) est enfilé, derrière celle-ci, dans le tuyau flexible (4) sur toute la longueur du tuyau flexible (4) et qu'ensuite au moyen du câble d'alimentation (19), la au moins une unité de rayonnement (18) soit tirée, à l'état activé, à travers le tuyau flexible (4) sur toute sa longueur.

2. Procédé selon la revendication 1, **caractérisé en ce que**, pour faire passer la au moins une unité de rayonnement (18), à l'état non activé, à travers le tuyau (4), on utilise un tambour rotatif (1), prévu pour l'enroulement du tuyau flexible (4), avec une vitesse d'enroulement fixe et une roue libre à freinage pour son déroulement.

3. Procédé selon la revendication 1 ou 2, **caractérisé en ce que**, pour faire passer la au moins une unité de rayonnement (18), à l'état activé, à travers le tuyau (4), on utilise un enrouleur de câble (20), prévu pour l'enroulement du câble d'alimentation (19), avec une vitesse d'enroulement pilotable ou réglable et une roue libre lors du déroulement.

4. Procédé selon l'une quelconque des revendications 1 à 3, **caractérisé en ce que**, pour coupler la au moins une unité de rayonnement (18) à la sangle de retenue (5), la partie du tuyau flexible (4) se trouvant dans la conduite de tuyau (3) est déconnectée du point de couplage de manière étanche à l'air.

5. Procédé selon la revendication 4, **caractérisé en ce qu'**après avoir couplé la au moins une unité de rayonnement (18) à la sangle de retenue (5), l'extrémité avant (9) du tuyau flexible (4), dans le sens de son déploiement, est à nouveau fermée, de manière étanche à l'air, renfermant la au moins une unité de rayonnement (18) et annulant la déconnexion de la partie du tuyau flexible (4) se trouvant dans la conduite du tuyau (3).

6. Procédé selon l'une quelconque des revendications 1 à 5, **caractérisé en ce qu'**après avoir fait passer la au moins une unité de rayonnement (18), à l'état non activé, à travers le tuyau flexible (4) au moyen de la sangle de retenue (5), l'unité de rayonnement (18) est désaccouplée de celle-ci.
